# EUROPEAN PATENT SPECIFICATION

(11) **EP 3 267 110 B1**
(45) Date of publication and mention of the grant of the patent: **28.07.2021**
(21) Application number: 17177128.0
(22) Date of filing: 21.06.2017
(51) Int. Cl.: F23R 3/00, B23P 15/00, F02K 9/64

(54) **METHOD FOR THE PRODUCTION OF A COMBUSTION CHAMBER**
VERFAHREN ZUR HERSTELLUNG EINER BRENNKAMMER
PROCÉDÉ DE PRODUCTION D'UNE CHAMBRE DE COMBUSTION

(30) Priority: 06.07.2016 DE 102016212314
(43) Date of publication of application: 10.01.2018
(73) Proprietor: ArianeGroup GmbH, 82024 Taufkirchen (DE)
(72) Inventor: BRUMMER, Ludwig, 85232 Bergkirchen (DE)
(74) Representative: Schicker, Silvia

(56) References cited:
- WO-A1-02/055861
- WO-A1-2006/038859
- DE-C1- 4 443 839
- FR-A- 669 625
- GB-A- 843 923
- US-A- 3 043 103
- US-A- 3 177 935
- US-A- 3 190 070
- US-A- 3 224 678
- US-A- 3 692 637
- US-A- 3 832 847
- US-A- 4 582 678
- US-A- 5 386 628
- US-A1- 2011 192 137

## Description

Method for the production of a combustion chamber. The invention relates to a method for the production of a combustion chamber suitable for use in a rocket engine.

In modern rocket engines, hydrogen is normally burned with oxygen and thrust is generated by this. By using hydrogen as a fuel, a high energy yield and consequently a high specific boost of the rocket engine can be achieved. However, in the combustion of hydrogen, in particular in a combustion chamber of the rocket engine, high combustion temperatures are reached, which lead to a high thermal loading of the combustion chamber components. Combustion chambers provided for use in a rocket engine are therefore usually formed with a double wall and comprise an inner wall enclosing a combustion space of the combustion chamber as well as an outer wall arranged coaxially with the inner wall, which outer wall bears the mechanical loads acting on the combustion chamber during operation of the combustion chamber. Formed between the inner wall and the outer wall are cooling ducts, which are delimited laterally by cooling duct fins extending between the inner wall and the outer wall. Such a combustion chamber architecture is described, for example, in EP 2 354 518 B1, US4582678 and US 2011/192137 A1.

During operation of the rocket engine, a fuel component, for example hydrogen, flows through the cooling ducts under a pressure that is increased compared with a pressure prevailing in the combustion chamber. Reaction heat arising during the combustion in a combustion space of the combustion chamber can then be transferred via the inner wall of the combustion chamber consisting of a thermally conductive material, for example a copper alloy, to the coolant flowing through the cooling ducts and can be transported away. Such a cooling process is termed regenerative cooling.

In combustion chambers currently used in rocket engines the inner wall and the cooling duct fins are normally formed in one piece. For example, the inner wall can be provided in the area of its outer surface with a rib structure forming the cooling duct fins, which structure can be introduced into the outer surface of the inner wall by mechanical machining, for example milling. Spaces existing between the ribs or cooling duct fins are then filled with wax to create a level application surface for an outer wall to be applied electrophoretically. For example, the outer wall can consist of a thin copper alloy layer and a nickel alloy layer lying over it, which are applied consecutively electrophoretically to the level application surface formed by filling the cooling ducts with wax. The cooling ducts are finally exposed by melting out the wax introduced between the cooling duct fins.

The object of the invention is to specify a combustion chamber that is easy to produce and is suitable in particular for use in a rocket engine. The object of the invention is further to specify a simplified method for the production of a combustion chamber suitable in particular for use in a rocket engine. Finally, the object of the invention is to provide a rocket engine equipped with such a combustion chamber.

This object is achieved by a method for the production of a combustion chamber with the features of claim 1.

A combustion chamber suitable for use in a rocket engine comprises a combustion space, in which a fuel is burned during operation of the combustion chamber and thrust is generated thereby. By way of example oxygen and hydrogen can be supplied to the combustion space in operation of the combustion chamber. The combustion chamber further comprises a first wall enclosing the combustion space as well as a plurality of cooling duct fins, which extend from a surface of the first wall and which separate adjacent cooling ducts from one another. The first wall is formed in one piece, at least in a circumferential direction of the combustion chamber. In other words, the first wall is formed continuously from just one component at least in a circumferential direction of the combustion chamber and not produced by joining separately formed elements. The first wall is then characterised by a simple manufacturability and high mechanical loading capacity. For example, the first wall can define a hollow cylinder formed in one piece, in particular a hollow circular cylinder formed in one piece.

The cooling duct fins are formed integrated with the first wall. Cooling duct fins formed integrated with the first wall can be produced by mechanical machining, such as milling of a semi-finished product provided for forming the first wall and the cooling ducts, for example.

The first wall can be an inner wall directly delimiting the combustion space, which wall preferably consists of a material with a high thermal conductivity, such as copper or a copper alloy, for example. The cooling duct fins then preferably extend from an outer surface of the first wall. A surface of the first wall facing the combustion space is preferably smooth, on the other hand, i.e. formed without indentations and/or projections. A smooth surface of the first wall facing the combustion space has no influence on the flow conditions in the combustion space.

Alternatively to this, however, the first wall can also be formed in the form of an outer wall of the combustion chamber, which forms a radially outer delimitation of the cooling ducts arranged between the cooling duct fins. The cooling duct fins extend then preferably from an inner surface of the first wall. A first wall formed in the form of an outer wall of the combustion chamber can be executed in multilayer form and have, for example, a copper layer facing the cooling ducts as well as an outer supporting nickel layer. Although the first wall is then constructed in multilayer form in a radial direction, in the circumferential direction of the combustion chamber it is preferably still formed in one piece or continuously.

The cooling duct fins have a bent section at their end facing away from the surface of the first wall, which section at least partially covers a cooling duct adjacent to the cooling duct fin. At least so many cooling duct fins are preferably provided at their end facing away from the surface of the first wall with a bent section that all cooling ducts defined by the cooling duct fins are at least partially, preferably completely covered.

The bent section of the cooling duct fins is used in the production of the combustion chamber at least as a carrier for a second wall to be arranged in particular coaxially with the first wall, which second wall can then be connected in a simple manner to the ends of the cooling duct fins facing away from the surface of the first wall. In particular, if all cooling ducts are covered by corresponding bent sections of the cooling duct fins and the second wall is to be formed from the material used for the production of the cooling duct fins, the second wall can be formed also exclusively by the bent sections of the cooling duct fins. Independently of whether the second wall is applied to the bent section of the at least one cooling duct fin or is formed by the bent section of the at least one cooling duct fin, however, the initial filling of the cooling ducts present between the cooling duct fins with wax, then applying the second wall and finally melting the wax out again can be dispensed with. The combustion chamber can therefore be produced particularly easily and at low cost.

If the first wall is executed in the form of an inner wall delimiting the combustion space of the combustion chamber, the second wall to be arranged coaxially with the first wall is preferably an outer wall of the combustion chamber, which forms a radially outer delimitation of the cooling ducts arranged between the cooling duct fins. Alternatively to this, i.e. if the first wall is executed in the form of an outer wall of the combustion chamber, the second wall to be arranged coaxially with the first wall is preferably an inner wall delimiting the combustion space of the combustion chamber.

As already mentioned, the combustion chamber has a second wall arranged in particular coaxially with the first wall, which second wall is formed exclusively by the bent sections of the cooling duct fins. However, the second wall preferably has a surface layer, which is applied to the bent section of at least one cooling duct fin. If the second wall is an outer wall of the combustion chamber, the surface layer can be a nickel layer, for example, which ensures a high mechanical loading capacity of the combustion chamber. If the second wall is an inner wall of the combustion chamber, the surface layer can by a high-temperature-resistant coating, for example, which protects the inner wall of the combustion chamber from the high temperatures prevailing in the combustion space of the combustion chamber.

In particular, since all cooling ducts are covered by corresponding bent sections of the cooling duct fins and the bent sections of the cooling duct fins form a continuous carrier layer for a surface layer of the second wall, the surface layer of the second wall can be applied electrophoretically, galvanically or by spraying. Alternatively to this, however, it is also conceivable to connect the surface layer of the second wall by other suitable joining techniques, such as welding or soldering, for example, to the ends of the cooling duct fins facing away from the surface of the first wall. Furthermore, the surface layer of the second wall can be formed in the form of half shells, which are placed onto the carrier layer formed by the bent section of the at least one cooling duct fin and screwed to one another. A surface layer of the second wall formed from a fibre-reinforced plastic can be applied by winding to the carrier layer formed by the bent section of the at least one cooling duct fin. When using such techniques it is not absolutely necessary to cover all cooling ducts.

In one embodiment of the combustion chamber, the bent section of the at least one cooling duct fin covers the cooling duct adjacent to the cooling duct fin completely. This is possible if the bent section has a dimension in the circumferential direction of the combustion chamber that corresponds at least to the dimension of the cooling duct in a circumferential direction of the combustion chamber. For example, each cooling duct fin of the combustion chamber can have a bent section, the dimension of which in the circumferential direction of the combustion chamber corresponds to the dimension of the cooling duct adjacent to the cooling duct fin in the circumferential direction of the combustion chamber. It is easily possible by this to cover all cooling ducts of the combustion chamber by corresponding bent sections of the cooling duct fins.

The bent section of the at least one cooling duct fin preferably has a reduced wall thickness compared with a wall thickness of the cooling duct fin. This makes the deformation of the at least one cooling duct fin easier.

Bent sections of cooling duct fins adjacent to one another can extend in the same direction in a circumferential direction of the combustion chamber substantially parallel to the first wall. In other words, cooling duct fins of the combustion chamber that are adjacent to one another can be provided at their ends facing away from the surface of the first wall, viewed in a circumferential direction of the combustion chamber, with sections bent respectively in the same direction, meaning either to the left or to the right.

In an alternative embodiment of the combustion chamber, at least one of the cooling duct fins has a first and a second bent section. The first and the second bent section preferably extend opposite to one another in a circumferential direction of the combustion chamber substantially parallel to the first wall. The first bent section then at least partially covers a first cooling duct adjacent to the cooling duct fin, while the second bent section at least partially covers a second cooling duct adjacent to the cooling duct fin. The first and the second bent section preferably have a reduced wall thickness compared with a wall thickness of the cooling duct fin and are therefore easily deformable.

If the first and the second bent section in a circumferential direction of the combustion chamber each have a dimension that corresponds to the dimension of the cooling ducts adjacent to the cooling duct fin in a circumferential direction of the combustion chamber, the first and the second bent section cover the cooling ducts adjacent to the cooling duct fin completely. In a combustion chamber in which all cooling ducts are to be covered by corresponding bent sections of the cooling duct fins, not all cooling duct fins then have to have a bent section. On the contrary, it is sufficient to provide every second cooling duct fin with a correspondingly dimensioned first and a correspondingly dimensioned second bent section.

Alternatively to this, however, it is also conceivable to product a first and a second bent section that are dimensioned so that they cover roughly half of the cooling ducts adjacent to the cooling duct fin. In a combustion chamber in which all cooling ducts are to be covered by corresponding bent sections of the cooling duct fins, preferably all cooling duct fins are then provided with a correspondingly dimensioned first and second bent section, so that the cooling ducts are covered by the oppositely directed bent sections of cooling duct fins adjacent to one another.

In principle it is conceivable to provide a combustion chamber with cooling duct fins, the bent sections of which extend exclusively in the same direction in a circumferential direction of the combustion chamber. Alternatively to this, a combustion chamber can also be equipped exclusively with cooling duct fins that each have two bent sections extending opposite to one another in a circumferential direction of the combustion chamber. However, the combustion chamber can also have both cooling duct fins with bent sections extending in the same direction in a circumferential direction of the combustion chamber and cooling duct fins with two bent sections extending opposite to one another in a circumferential direction of the combustion chamber.

In a preferred embodiment of the combustion chamber, adjoining bent sections of the cooling duct fins are welded or soldered to one another. A fluid-tight seal of the cooling ducts is guaranteed by this, so that the second wall can be applied electrophoretically, galvanically or by spraying onto the carrier layer formed by the bent sections of the cooling duct fins.

In a method to produce a combustion chamber suitable in particular for use in a rocket engine, a first wall enclosing a combustion space is provided. Furthermore, a plurality of cooling duct fins is provided, which extend from a surface of the first wall in order to separate adjacent cooling ducts from one another. At least one of the cooling duct fins is deformed at its end facing away from the surface of the first wall to form a bent section, which at least partially covers a cooling duct adjacent to the cooling duct fin.

The deformation of the at least one cooling duct fin can take place by rolling, for example.

If necessary a counterholder can be introduced into the cooling duct adjacent to the cooling duct fin when deforming the at least one cooling duct fin. In particular, the counterholder can be introduced into the cooling duct that is adjacent to the cooling duct fin and is to be closed by the bent section of the cooling duct fin. An undesirable deformation of the cooling duct fin in the area of the cooling duct is prevented by the use of a counterholder.

A second wall of the combustion chamber arranged in particular coaxially with the first wall can be formed exclusively by bent sections of a plurality of cooling duct fins. However, preferably one surface layer of a second wall arranged in particular coaxially with the first wall is applied to the bent section of the at least one cooling duct fin. The surface layer can be applied electrophoretically, galvanically or by spraying onto a carrier layer formed by the bent section of the at least one cooling duct fin. Alternatively to this, the surface layer of the second wall can be connected by welding or soldering to the ends of the cooling duct fins facing away from the surface of the first wall or a surface layer formed in the form of half shells can be placed onto the carrier layer formed by the bent section of the at least one cooling duct fin and screwed. A surface layer formed from a fibre-reinforced plastic can be applied to the carrier layer formed by the bent section of the at least one cooling duct fin by winding.

In a preferred embodiment of the method for the production of a combustion chamber, before the deformation of the at least one cooling duct fin, a wall thickness of a cooling duct fin section to be deformed to form the bent section is reduced compared with a wall thickness of the cooling duct fin. As an example, the cooling duct fin section to be deformed can be mechanically machined by milling until the cooling duct fin section to be deformed has the desired reduced thickness. Alternatively to this, the cooling duct fin section to be deformed can be provided with a parting cut to create two cooling duct fin sections to be deformed with a desired reduced thickness.

A plurality of cooling duct fins can be deformed at their ends facing away from the surface of the first wall in such a way that bent sections of cooling duct fins adjacent to one another extend in the same direction in a circumferential direction of the combustion chamber substantially parallel to the first wall.

Alternatively or in addition to this, at least one of the cooling duct fins can also be deformed at its end facing away from the surface of the first wall such that a first and a second bent section are formed, which extend opposite to one another in a circumferential direction of the combustion chamber substantially parallel to the first wall.

To create the first and the second bent section, first a parting cut running substantially parallel to a longitudinal axis of the cooling duct fin can be introduced into the end of the cooling duct fin facing away from the surface of the first wall. Cooling duct fin sections to be deformed, which are separated from one another by the parting cut, can then be bent in directions opposed to one another.

Bent sections of the cooling duct fins adjoining one another can be welded or soldered to one another if required to ensure a fluid-tight covering of the cooling ducts.

A rocket engine can be equipped with a combustion chamber described above.

Preferred embodiments of the invention are explained in greater detail below with reference to the enclosed schematic drawings, wherein
- Figure 1: shows a cross-sectional representation of a first embodiment of a combustion chamber suitable for use in a rocket engine,
- Figures 2a to d: illustrate a method for the production of the combustion chamber according to figure 1,
- Figure 3: shows a cross-sectional representation of a second embodiment of a combustion chamber suitable for use in a rocket engine,
- Figures 4a to d: illustrate a method for the production of the combustion chamber according to figure 3,
- Figure 5: shows a cross-sectional representation of a third embodiment of a combustion chamber suitable for use in a rocket engine and
- Figures 6a to d: illustrate a method for the production of the combustion chamber according to figure 5.

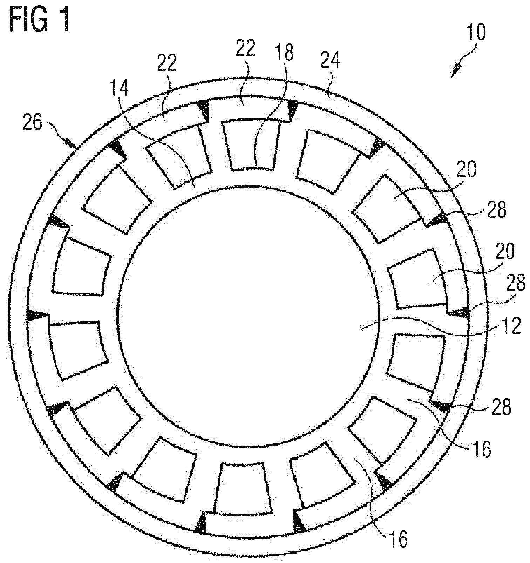

A combustion chamber 10 shown in figure 1 and suitable for use in a rocket engine comprises a combustion space 12, in which a fuel is burnt during operation of the combustion chamber and thrust is generated by this. The combustion space 12 is enclosed by a first wall 14, which is formed in one piece in a circumferential direction of the combustion chamber 10. In the embodiment of a combustion chamber 10 illustrated in figure 1, the first wall 14 thus forms an inner wall delimiting the combustion space 12 of the combustion chamber 10. Cooling duct fins 16 extend from a surface 18 of the first wall 14 and are used to separate adjacent cooling ducts 20 from one another. In the embodiment of a combustion chamber 10 illustrated in figure 1, the cooling duct fins 16 extend from an outer surface of the inner wall of the combustion chamber 10 delimiting the combustion space 12. The cooling duct fins 16 in the combustion chamber 10 shown in figure 1 are further formed integrated with the first wall 14 and consist, like the first wall 14, of a satisfactorily thermally conductive copper alloy.

The cooling duct fins 16 each have at their end facing away from the surface 18 of the first wall 14 a bent section 22, which at least partially covers a cooling duct 20 adjacent to the cooling duct fin 16. The bent sections 22 of cooling duct fins 16 adjacent to one another extend respectively in the same direction in a circumferential direction of the combustion chamber 10 parallel to the first wall 14. In the combustion chamber 10 according to figure 1, each of the bent sections 22 extends from the corresponding cooling duct fin 16 in a circumferential direction of the combustion chamber 10 to the right parallel to the first wall 14 and completely covers a cooling duct 20 adjacent to the cooling duct fin 16 on the right. Each of the bent sections 22 has a reduced wall thickness compared with the wall thickness of the cooling duct fin 16. Bent sections 22 adjoining one another are respectively welded or soldered to one another to ensure a fluid-tight covering of the cooling ducts 20. A welding or soldering region is designated by the reference figure 28.

The bent sections 22 of the cooling duct fins 16 form a continuous carrier layer, to which a surface layer 24 is applied. The bent sections 22 of the cooling duct fins 16 thus form jointly with the surface layer 24 a second wall 26, which in the combustion chamber 10 illustrated in figure 1 defines an outer wall of the combustion chamber 10. The second wall 26 bears the mechanical loads acting on the combustion chamber 10 in operation of the combustion chamber 10 and is therefore provided with a mechanically highly durable surface layer 24. For example, the surface layer 24 can consist of a nickel alloy. Alternatively to this, however, the surface layer 24 can also be executed in multiple layers and have a copper alloy layer facing the cooling ducts 20, for example, as well as a nickel alloy layer facing away from the cooling ducts 20.

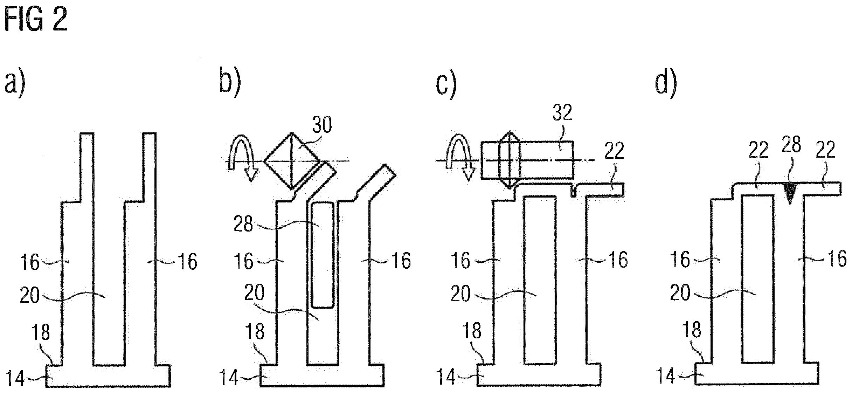

In figures 2a to d a method for the production of the combustion chamber 10 shown in figure 1 is illustrated. To produce the combustion chamber 10, the first wall 14 enclosing the combustion space 12 and the cooling duct fins 16 are provided, which fins are formed integrated with the first wall 14 in the combustion chamber 10 illustrated in figure 1 and separate adjacent cooling ducts 20 from one another. To produce the combustion chamber 10 according to figure 1, each of the cooling duct fins 16 is deformed at its end facing away from the surface 18 of the first wall 14 to create a bent section 22, which at least partially covers a cooling duct 20 adjacent to the cooling duct fin 16.

In the production method illustrated in figures 2a to d in particular, a wall thickness of a cooling duct fin section to be deformed to form the bent section 22 is first reduced compared with a wall thickness of the cooling duct fin before deformation of the at least one cooling duct fin, see figure 2a. To do this, the cooling duct fin section to be deformed is mechanically machined by milling. In figure 2a the wall thickness of the cooling duct fin section to be deformed is shown before the mechanical machining by milling by the dashed lines, while the wall thickness of the cooling duct fin section to be deformed in shown after mechanical machining by milling by the continuous lines.

In the next step illustrated in figure 2b, a counterholder 28 is introduced into the cooling duct 20, which is adjacent to the cooling duct fin 16 to be deformed and is to be covered by the bent section 22 of the cooling duct fin 16. The cooling duct fin 16, meaning the cooling duct fin section to be deformed, is then deformed by rolling by a rolling attachment 30, i.e. bent in the direction of the cooling duct 20 to be covered (to the right in figures 2a to 2d). The counterholder 28 prevents an undesirable deformation of the cooling duct fin 16 in the region of the cooling duct 20 in this process. The cooling duct fin section to be deformed is first only bent so far in the direction of the cooling duct 20 to be covered that the counterholder 28 can still be removed from the cooling duct 20.

Following the removal of the counterholder 28 from the cooling duct 20, complete deformation of the cooling duct fin section to be deformed takes place by means of another rolling attachment 32, so that the bent section 22 is created, which extends substantially perpendicular to the undeformed part of the cooling duct fin 16 and completely covers the cooling duct 20 adjacent to the cooling duct fin 16 on the right, see figure 2c. To produce the combustion chamber 10 according to figure 1, all cooling duct fins 16 are deformed at their ends facing away from the surface 18 of the first wall 14, as described above, in such a way that the bent sections 22 of cooling duct fins 16 adjacent to one another extend in the same direction in a circumferential direction of the combustion chamber 10 substantially parallel to the first wall 14.

In the next step, adjoining bent sections 22 of the cooling duct fins 16 are welded or soldered to one another, see figure 2d, to ensure a fluid-tight covering of the cooling ducts 20. Finally, to create the second wall 26 of the combustion chamber 10, the surface layer 24 can be applied to the continuous, fluid-tight carrier layer formed by the bent sections 22 of the cooling duct fins 16. The surface layer 24 can be applied electrophoretically, galvanically or by spraying onto the carrier layer formed by the bent sections 22 of the cooling duct fins 16. Alternatively to this, however, it is also conceivable to connect the surface layer 24 by other suitable joining techniques, such as welding or soldering, for example, to the carrier layer formed by the bent sections 22 of the cooling duct fins 16. Furthermore, the surface layer 24 of the second wall 26 can be formed in the form of half shells, which are placed onto the carrier layer formed by the bent sections 22 of the cooling duct fins 16 and screwed to one another. A surface layer 24 formed of fibre-reinforced plastic can be applied to the carrier layer formed by the bent sections 22 of the cooling duct fins 16 by winding.

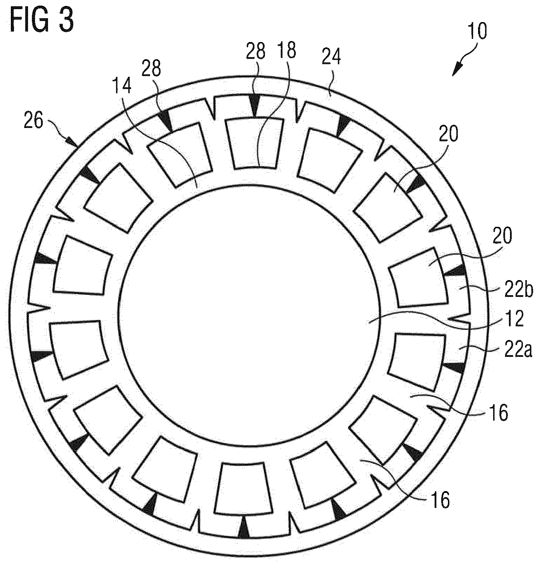

The combustion chamber 10 shown in figure 3 differs from the arrangement according to figure 1 in that the cooling duct fins 16 each have a first and a second bent section 22a, 22b, which each extend opposite to one another in a circumferential direction of the combustion chamber 10 substantially parallel to the first wall 14. Each first bent section 22a covers only half of a cooling duct 20 adjacent to the corresponding cooling duct fin 16 on the right, while each second bent section 22b covers half of a cooling duct 20 adjacent to the corresponding cooling duct fin 16 on the left. The structure and mode of operation of the combustion chamber 10 shown in figure 3 otherwise correspond to the structure and mode of operation of the arrangement according to figure 1.

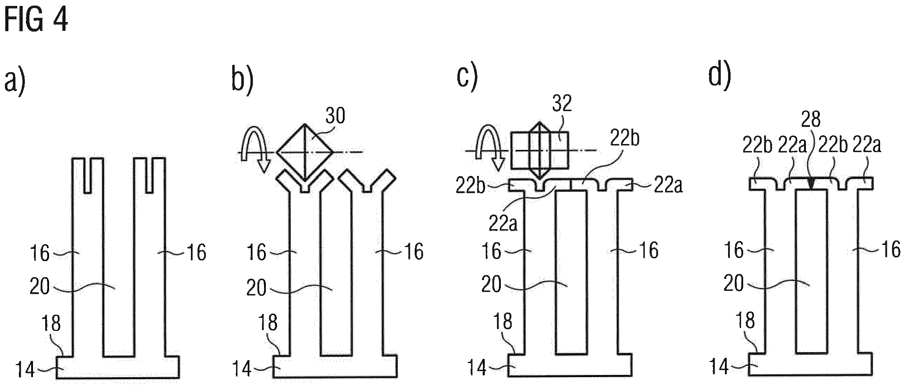

Figures 4a to d illustrate a method for the production of the combustion chamber 10 shown in figure 3, which differs from the method used for the production of the combustion chamber 10 shown in figure 1, which method is illustrated in figures 2a to d, in that to create the first and the second bent section 22a, 22b, a parting cut running substantially parallel to a longitudinal axis L of each cooling duct fin 16 is first introduced into the end of the cooling duct fin 16 facing away from the surface 18 of the first wall 14, see figure 4a.

Cooling duct fin sections to be deformed, which are separated from one another by the parting cut, are then bent by the rolling attachment 30 in opposite directions to one another, see figure 4b. A complete deformation of the cooling duct fin sections to be deformed is achieved, as shown in figure 4c, by the rolling attachment 32. The bent sections 22a, 22b are thereby created, which extend substantially perpendicular to the undeformed part of the cooling duct fin 16, wherein each first bent section 22a covers half of the cooling duct 20 adjacent to the corresponding cooling duct fin 16 on the right, while each second bent section 22b covers half of a cooling duct 20 adjacent to the corresponding cooling duct fin 16 on the left.

Adjoining bent sections 22a, 22b are then welded or soldered to one another to cover the cooling ducts 20 in a fluid-tight manner, see figure 4d. A soldering or welding region is again designated by the reference figure 28. Finally, as described above, the surface layer 24 of the second wall 26 is applied to the carrier layer created by the bent sections 22a, 22b.

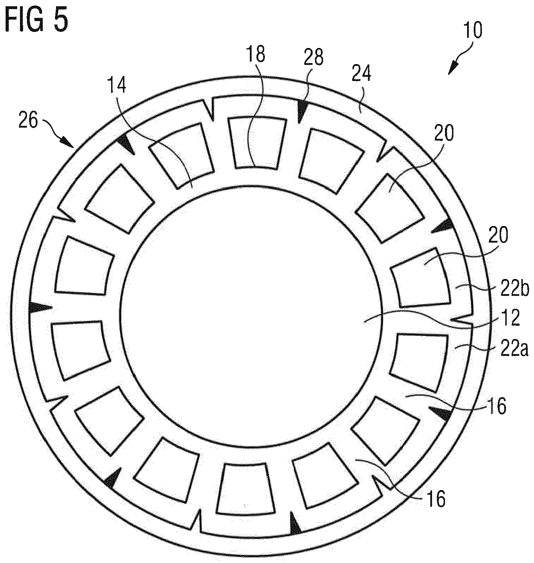

The combustion chamber 10 shown in figure 5 differs from the arrangement according to figure 3 in that, viewed in a circumferential direction of the combustion chamber 10, only every second cooling duct fin 16 has a first and a second bent section 22a, 22b, which extend respectively opposite to one another in a circumferential direction of the combustion chamber 10 substantially parallel to the first wall 14. Each first bent section 22a completely covers a cooling duct 20 adjacent to the corresponding cooling duct fin 16 on the right, while each second bent section 22b completely covers a cooling duct 20 adjacent to the corresponding cooling duct fin 16 on the left. The structure and mode of operation of the combustion chamber 10 shown in figure 5 otherwise correspond to the structure and mode of operation of the arrangement according to figure 3.

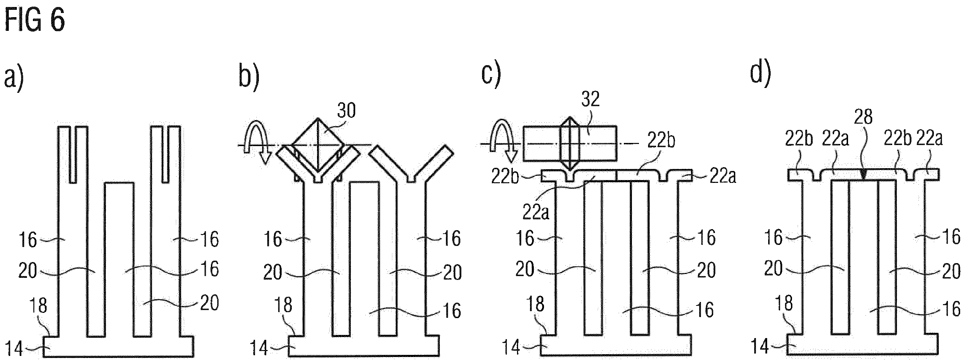

Figures 6a to d illustrate a method for the production of the combustion chamber 10 shown in figure 5, which differs from the method used for the production of the combustion chamber 10 shown in figure 3, which method is illustrated in figures 4a to d, in that to create the first and the second bent section 22a, 22b, a parting cut running substantially parallel to a longitudinal axis L of every second cooling duct fin 16 is first introduced into the end of the cooling duct fin 16 facing away from the surface 18 of the first wall 14, see figure 6a.

Cooling duct fin sections to be deformed, which are separated from one another by the parting cut, are then bent by the rolling attachment 30 in opposite directions to one another, see figure 6b. A complete deformation of the cooling duct fin sections to be deformed is achieved, as shown in figure 6c, by the rolling attachment 32. The bent sections 22a, 22b are thereby created, which extend substantially perpendicular to the undeformed part of the cooling duct fin 16, wherein each first bent section 22a completely covers a cooling duct 20 adjacent to the corresponding cooling duct fin 16 on the right, while each second bent section 22b completely covers a cooling duct 20 adjacent to the corresponding cooling duct fin 16 on the left.

Adjoining bent sections 22a, 22b are then welded or soldered to one another to cover the cooling ducts 20 in a fluid-tight manner, see figure 6d. A soldering or welding region is again designated by the reference figure 28. Finally, as described above, the surface layer 24 of the second wall 26 is applied to the carrier layer created by the bent sections 22a, 22b.

## Claims

1. Method for the production of a combustion chamber (10) suitable for use in a rocket engine with the steps:
- providing a first wall (14) enclosing a combustion space (12) and formed in one piece at least in a circumferential direction of the combustion chamber (10);
- providing a plurality of cooling duct fins (16) which are formed integrated with the first wall (14) and which extend from a surface (18) of the first wall (14) to separate adjacent cooling ducts (20) from one another;
- deforming the cooling duct fins (16) at their ends facing away from the surface (18) of the first wall (14) to create a bent section (22; 22a, 22b), which at least partially covers a cooling duct (20) adjacent to the cooling duct fin (16), wherein a plurality of cooling duct fins (16) are deformed at their ends facing away from the surface (18) of the first wall (20) in such a way that bent sections (22) of adjacent cooling duct fins (16) extend in the same direction in a circumferential direction of the combustion chamber (10) substantially parallel to the first wall (14) and/or wherein at least one of the cooling duct fins (16) is deformed at its end facing away from the surface (18) of the first wall (14) in such a way that a first and a second bent section (22a, 22b) are formed, which extend opposite to one another in the circumferential direction of the combustion chamber (10) substantially parallel to the first wall (14); and
- welding or soldering adjoining bent sections (22; 22a, 22b) of the cooling duct fins (16) to one another.

2. Method according to claim 1, **characterised in that** the deformation of the at least one cooling duct fin (16) takes place by rolling and/or that during the deformation of the at least one cooling duct fin (16) a counterholder (28) is introduced into the cooling duct (20) adjacent to the cooling duct fin (16).

3. Method according to claim 1 or 2, **characterised in that** a surface layer (24) of a second wall (26) arranged in particular coaxially with the first wall (14) is applied to the bent section (22; 22a, 22b) of the at least one cooling duct fin (16).

4. Method according to one of claims 1 to 3, **characterised in that** prior to the deformation of the at least one cooling duct fin (16), a wall thickness of a cooling duct fin section to be deformed to create the bent section (22; 22a, 22b) is reduced compared with a wall thickness of the cooling duct fin (16).

5. Method according to one of claims 1 to 4, **characterised in that** to create the first and second bent section (22a, 22b), a parting cut running substantially parallel to a longitudinal axis (L) of the cooling duct fin (16) is first introduced into the end of the cooling duct fin (16) facing away from the surface (18) of the first wall (14) and cooling duct fin sections to be deformed, which are separated from one another by the parting cut, are then bent in opposite directions to one another.

## Patentansprüche

1. Verfahren zur Herstellung einer Brennkammer (10), die zur Verwendung in einem Raketentriebwerk geeignet ist, mit den Schritten:
- Bereitstellen einer ersten Wand (14), die einen Brennraum (12) umschließt und zumindest in einer Umfangsrichtung der Brennkammer (10) einstückig ausgebildet ist;
- Bereitstellen einer Mehrzahl von Kühlkanalrippen (16), die integriert mit der ersten Wand (14) ausgebildet sind und die sich von einer Oberfläche (18) der ersten Wand (14) erstrecken, um benachbarte Kühlkanäle (20) voneinander zu trennen;
- Verformen der Kühlkanalrippen (16) an ihren von der Oberfläche (18) der ersten Wand (14) abgewandten Enden zur Erzeugung eines umgebogenen Abschnitts (22; 22a, 22b), der einen an die Kühlkanalrippe (16) angrenzenden Kühlkanal (20) zumindest teilweise abdeckt, wobei eine Mehrzahl von Kühlkanalrippen (16) an ihren von der Oberfläche (18) der ersten Wand (20) abgewandten Enden derart verformt sind, dass sich umgebogene Abschnitte (22) benachbarter Kühlkanalrippen (16) in der gleichen Richtung in einer Umfangsrichtung der Brennkammer (10) im Wesentlichen parallel zu der ersten Wand (14) erstrecken und/oder wobei mindestens eine der Kühlkanalrippen (16) an ihrem von der Oberfläche (18) der ersten Wand (14) abgewandten Ende derart verformt ist, dass ein erster und ein zweiter umgebogener Abschnitt (22a, 22b) gebildet werden, die sich entgegengesetzt zueinander in Umfangsrichtung des Brennraums (10) im Wesentlichen parallel zu der ersten Wand (14) erstrecken; und
- Verschweißen oder Verlöten von aneinandergrenzenden umgebogenen Abschnitten (22; 22a, 22b) der Kühlkanalrippen (16) miteinander.

2. Verfahren nach Anspruch 1, **dadurch gekennzeichnet, dass** die Verformung der mindestens einen Kühlkanalrippe (16) durch Walzen erfolgt und/oder dass während der Verformung der mindestens einen Kühlkanalrippe (16) ein Gegenhalter (28) benachbart zu der Kühlkanalrippe (16) in den Kühlkanal (20) eingebracht wird.

3. Verfahren nach Anspruch 1 oder 2, **dadurch gekennzeichnet, dass** auf den umgebogenen Abschnitt (22; 22a, 22b) der mindestens einen Kühlkanalrippe (16) eine Oberflächenschicht (24) einer insbesondere koaxial zur ersten Wand (14) angeordneten zweiten Wand (26) aufgebracht wird.

4. Verfahren nach einem der Ansprüche 1 bis 3, **dadurch gekennzeichnet, dass** vor der Verformung der mindestens einen Kühlkanalrippe (16) eine Wandstärke eines zur Erzeugung des umgebogenen Abschnitts (22; 22a, 22b) zu verformenden Kühlkanalrippenabschnitts im Vergleich zu einer Wandstärke der Kühlkanalrippe (16) reduziert wird.

5. Verfahren nach einem der Ansprüche 1 bis 4, **dadurch gekennzeichnet, dass** zur Erzeugung des ersten und des zweiten umgebogenen Abschnitts (22a, 22b) zunächst ein im Wesentlichen parallel zu einer Längsachse (L) der Kühlkanalrippe (16) verlaufender Trennschnitt in das von der Oberfläche (18) der ersten Wand (14) abgewandte Ende der Kühlkanalrippe (16) eingebracht wird und anschließend zu verformende Kühlkanalrippenabschnitte, die durch den Trennschnitt voneinander getrennt sind, gegenläufig zueinander umgebogen werden.

## Revendications

1. Procédé de production d'une chambre de combustion (10) appropriée pour une utilisation dans un moteur-fusée avec les étapes :
- la fourniture d'une première paroi (14) renfermant un espace de combustion (12) et formée d'une seule pièce au moins dans une direction circonférentielle de la chambre de combustion (10) ;
- la fourniture d'une pluralité d'ailettes de conduit de refroidissement (16) qui sont formées d'un seul tenant avec la première paroi (14) et qui s'étendent depuis une surface (18) de la première paroi (14) pour séparer les conduits de refroidissement (20) adjacents les uns des autres ;
- la déformation des ailettes de conduit de refroidissement (16) à leurs extrémités opposées à la surface (18) de la première paroi (14) pour créer une section coudée (22 ; 22a, 22b), qui recouvre au moins partiellement un conduit de refroidissement (20) adjacent à l'ailette de conduit de refroidissement (16), dans laquelle une pluralité d'ailettes de conduit de refroidissement (16) sont déformées à leurs extrémités opposées à la surface (18) de la première paroi (20) de telle manière que les sections coudées (22) des ailettes de conduit de refroidissement (16) adjacentes s'étendent dans la même direction dans une direction circonférentielle de la chambre de combustion (10) sensiblement parallèle à la première paroi (14) et/ou dans laquelle au moins une des ailettes de conduit de refroidissement (16) est déformée à son extrémité opposée à la surface (18) de la première paroi (14) de telle manière qu'une première et une seconde sections coudées (22a, 22b) sont formées, qui s'étendent à l'opposé l'une de l'autre dans la direction circonférentielle de la chambre de combustion (10) sensiblement parallèle à la première paroi (14) ; et
- le soudage ou le brasage des sections coudées (22 ; 22a, 22b) contiguës des ailettes de conduit de refroidissement (16) les unes aux autres.

2. Procédé selon la revendication 1, **caractérisé en ce que** la déformation de l'au moins une ailette de conduit de refroidissement (16) a lieu par laminage et/ou que lors de la déformation de l'au moins une ailette de conduit de refroidissement (16) un contre-support (28) est introduit dans le conduit de refroidissement (20) adjacent à l'ailette de conduit de refroidissement (16).

3. Procédé selon la revendication 1 ou 2, **caractérisé en ce qu'**une couche superficielle (24) d'une deuxième paroi (26) disposée notamment de manière coaxiale à la première paroi (14) est appliquée sur la section coudée (22 ; 22a, 22b) de l'au moins une ailette de conduit de refroidissement (16).

4. Procédé selon l'une des revendications 1 à 3, **caractérisé en ce que** préalablement à la déformation de l'au moins une ailette de conduit de refroidissement (16), une épaisseur de paroi d'une section d'ailette de conduit de refroidissement devant être déformée pour créer la section coudée (22 ; 22a, 22b) est réduite par rapport à une épaisseur de paroi de l'ailette de conduit de refroidissement (16).

5. Procédé selon l'une des revendications 1 à 4, **caractérisé en ce que** pour créer les première et seconde sections coudées (22a, 22b), une découpe de séparation s'étendant sensiblement parallèlement à un axe longitudinal (L) de l'ailette de conduit de refroidissement (16) est d'abord introduite dans l'extrémité de l'ailette de conduit de refroidissement (16) opposée à la surface (18) de la première paroi (14) et les sections d'ailette de conduit de refroidissement à déformer, qui sont séparées les unes des autres par la découpe de séparation, sont ensuite courbées dans des directions opposées les unes aux autres.
